# EUROPEAN PATENT SPECIFICATION

(11) **EP 2 934 917 B1**
(45) Date of publication and mention of the grant of the patent: **22.05.2019**
(21) Application number: 13864536.1
(22) Date of filing: 09.12.2013
(51) Int. Cl.: B60C 11/03, B60C 11/117, B60C 15/02, B60C 15/06, B60C 9/18, B60C 11/04, B60C 9/20, B60C 3/04

(54) **AGRICULTURAL RADIAL IMPLEMENT TIRE**
LANDWIRTSCHAFTLICHER RADIALER REIFEN
PNEUMATIQUE AGRICOLE À CARCASSE RADIALE

(30) Priority: 21.12.2012 US 201213723237
(43) Date of publication of application: 28.10.2015
(73) Proprietor: Bridgestone Americas Tire Operations, LLC, Nashville, TN 37201 (US)
(72) Inventor: SCHREINER, Matthew, Akron, Ohio 44313 (US); SUBE, H., Wadsworth, Ohio 44281 (US); PARMA, Daryl, Uniontown, Ohio 44685 (US)
(74) Representative: Banzer, Hans-Jörg
(86) International application number: PCT/US2013/073846
(87) International publication number: WO 2014/099442

(56) References cited:
- EP-A1- 0 795 426
- EP-A1- 1 693 229
- WO-A1-01/17801
- JP-A- 2008 074 250
- JP-A- 2010 089 725
- US-A- 5 411 067
- US-A1- 2005 139 302

## Description

### BACKGROUND OF THE INVENTION

### 1. Field of the Invention

The present invention relates to pneumatic tires, and more particularly to tires for use on non self propelled agricultural implements.

### 2. Description of the Prior Art

Conventional construction for free rolling farm implement tires has typically been of the bias ply construction utilizing a ribbed implement tread. Such a tire is known from WO 01/17801 A1 showing the features of the preamble of claim 1.

There is a continuing need for improvement in agricultural implement tires, and particularly tires which can carry heavier loads than traditional bias ply construction agricultural implement tires.

### SUMMARY OF THE INVENTION

In one aspect a pneumatic agricultural implement tire includes a circumferential tread portion including a ribbed implement tread pattern having a plurality of relatively wide parallel circumferential ribs separated by relatively narrow circumferential grooves. The tire includes a pair of bead portions and a pair of sidewall portions extending from the bead portions to the tread portion. A carcass of the tire includes first and second organic cord reinforced radial body plies extending between and wrapped around the bead portions. First and second steel reinforced circumferential extending belts are disposed between the carcass and the circumferential tread portion. The tire is sized to fit on a rim having a nominal diameter in a range from about 38,1 cm (15 inches) to about 45, 72 cm (18 inches). The tire has an "IF" load rating in accordance with the standards of the Tire and Rim Association.

In another aspect a pneumatic agricultural implement tire includes a circumferential tread portion including a ribbed implement tread pattern having a plurality of relatively wide parallel circumferential ribs separated by relatively narrow circumferential grooves. The tire includes a pair of bead portions and a pair of sidewall portions extending from the bead portions to the tread portion. A carcass of the tire includes first and second organic cord reinforced radial body plies extending between and wrapped around the bead portions. First and second steel reinforced circumferential extending belts are disposed between the carcass and the circumferential tread portion. The tire has a size and load capacity selected from the group consisting of (the corresponding SI-units with regard to "inch", "lb" and "psi" can be derived from table I):
a size IF280/70R15 rated for a load of at least about 3960 lb at a cold inflation pressure of 52 psi;
a size IF240/80R15 rated for a load of at least about 3200 lb at a cold inflation pressure of 46 psi;
a size IF265/85R15 rated for a load of at least about 3200 lb at a cold inflation pressure of 35 psi;
a size IF320/70R15 rated for a load of at least about 4800 lb at a cold inflation pressure of 52 psi;
a size IF195/95R15 rated for a load of at least about 2470 lb at a cold inflation pressure of 41 psi;
a size IF280/70R16 rated for a load of at least about 2680 lb at a cold inflation pressure of 29 psi;
a size IF265/85R16 rated for a load of at least about 2910 lb at a cold inflation pressure of 29 psi;
a size IF190/95R16 rated for a load of at least about 1930 lb at a cold inflation pressure of 29 psi;
a size IF280/95R16 rated for a load of at least about 3520 lb at a cold inflation pressure of 29 psi;
a size IF440/55R18 rated for a load of at least about 5840 lb at a cold inflation pressure of 41 psi;
a size IF340/65R18 rated for a load of at least about 4940 lb at a cold inflation pressure of 46 psi; and
a size IF355/65R18 rated for a load of at least about 5200 lb at a cold inflation pressure of 46 psi.

In any of the embodiments above the tire may have a D speed rating in accordance with the standards of the Tire and Rim Association.

In any of the embodiments above, the carcass may include two and only two body plies being the first and second body plies.

In any of the embodiments above, the tire may include two and only two belts being the first and second belts.

In any of the embodiments above, the organic cords of the body plies may comprise polyester cords.

In any of the embodiments above, the carcass may include two and only two body plies being the first and second body plies, and the organic cords of the body plies may comprise polyester cords.

In any of the embodiments above, the carcass may include two and only two body plies being the first and second body plies, and the tire may include two and only two belts being the first and second belts.

Numerous objects, features and advantages of the present invention will be readily apparent to those skilled in the art upon a reading of the following disclosure when taken in conjunction with the accompanying drawings.

### BRIEF DESCRIPTION OF THE DRAWINGS

Fig. 1 is a schematic plan view of a farm implement, in this case a wing fold type seed planter being drawn by a tractor.
Fig. 2 is a schematic rear elevation view of the farm implement of Fig. 1 showing the wing portions of the planter in operational mode in solid lines, and folded up into transport mode in dashed lines.
Fig. 3 is a cross-sectional view of one embodiment of a tire of the present invention.

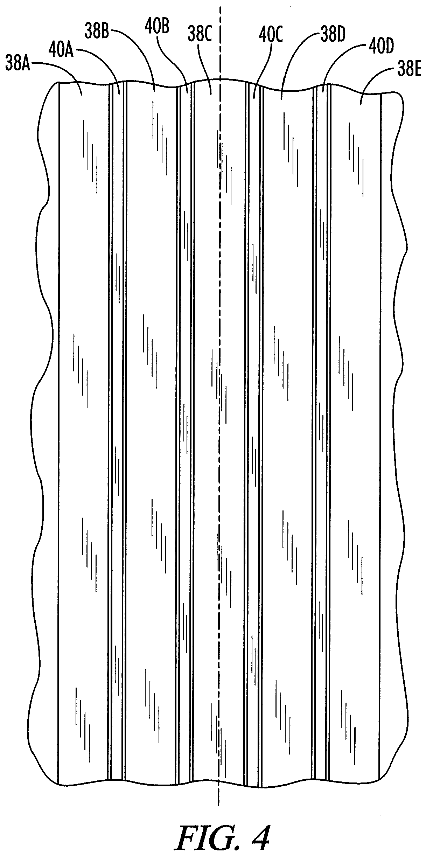

Fig. 4 is a laid out view of the tread portion of the tire.
Fig. 5 is a comparison of the cross-sectional profile of one of the agricultural radial implement tires of the present invention to a prior art bias ply implement tire which would be replaced by the present tire.
Fig. 6 is a comparison of the footprint of one of the agricultural radial implement tires of the present invention to a prior art bias ply implement tire which would be replaced by the present tire.

### DETAILED DESCRIPTION OF THE INVENTION

Following are definitions of selected terms employed herein. The definitions include various examples and/or forms of components that fall within the scope of a term and that may be used for implementation. The examples are not intended to be limiting. Both singular and plural forms of terms may be within the definitions.

"Aspect ratio" means the ratio of the tire's section height to its section width.

"Axial" and "axially" refer to directions which are parallel to the axis of rotation of a tire.

"Bead" or "bead core" refers to that part of a tire comprising an annular tensile member, the bead core, wrapped by ply cords and shaped, with or without other reinforcement elements to fit a designed tire rim.

"Belt" or "belt ply" refers to an annular layer or ply of parallel cords, woven or unwoven, underlying the tread, not anchored to the bead.

"Carcass" refers to the tire structure apart from the belt structure, tread, undertread, and sidewall rubber but including the beads, (carcass plies are wrapped around the beads).

"Circumferential" refers to lines or directions extending along the perimeter of the surface of the annular tread perpendicular to the axial direction.

"Cord" means one of the reinforcement strands of which the plies in the tire are comprised.

"Crown" refers to substantially the outer circumference of a tire where the tread is disposed.

"Equatorial plane (EP)" refers to a plane that is perpendicular to the axis of rotation of a tire and passes through the center of the tire's tread.

"Inner liner" means the layer or layers of elastomer or other material that form the inside surface of a tubeless tire and that contain the inflating fluid within the tire.

"Nominal rim diameter" means the average diameter of the rim flange at the location where the bead portion of the tire seats.

"Ply" means a continuous layer of rubber coated parallel cords.

"Radial" and "radially" refer to directions that are perpendicular to the axis of rotation of a tire.

"Radial-ply" or "radial-ply tire" refers to a belted or circumferentially-restricted pneumatic tire in which the ply cords which extend from bead to bead are laid at cord angles between 65 degree and 90 degree with respect to the equatorial plane of the tire.

"Section height" (SH) means the radial distance from the base of the bead core to the outer diameter of the tire at its equatorial plane.

"Section width" (SW) means the maximum linear distance parallel to the axis of the tire and between the exterior of its sidewalls when and after it has been inflated at normal inflation pressure for 24 hours, but unloaded, excluding elevations of the sidewalls due to labeling, decoration or protective bands.

"Turn-up height" (TH) means the radial distance from the base of the bead core to the upper end of the turn-up.

Directions are also stated in this application with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" are used in connection with an element, the "upper" element is spaced closer to the tread than the "lower" element. Additionally, when relative directional terms such as "above" or "below" are used in connection with an element, an element that is "above" another element is closer to the tread than the other element. The terms "axially inward" and "axially inwardly" refer to a general direction towards the equatorial plane of the tire, whereas "axially outward" and "axially outwardly" refer to a general direction away from the equatorial plane of the tire and towards the sidewall of the tire.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or multiple components.

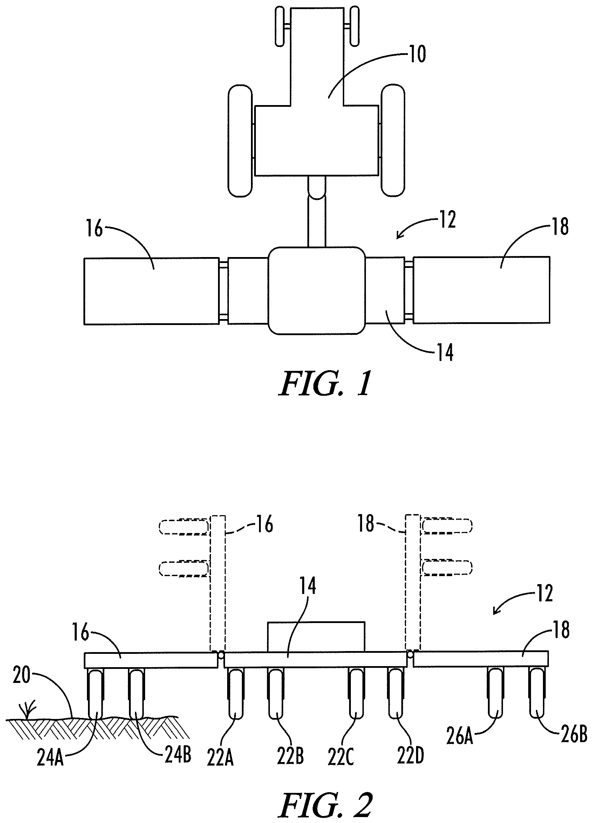

In Fig. 1, a schematic plan view is shown of a tractor 10 pulling a free wheeled agricultural implement which in the case illustrated is a wing fold type seed planter 12. The seed planter 12 includes a center portion 14 and left and right wing portions 16 and 18.

As seen in Fig. 2, the center portion 14 and the wing portions 16 and 18 are each supported from the ground surface 20 by a plurality of pneumatic tires mounted on wheel rims. In the illustration of Fig. 2, the center portion 14 is carried by four center portion tires 22A, 22B, 22C and 22D. The wing portion 16 is carried on two wing portion tires 24A and 24B and the wing portion 18 is carried on two wing portion tires 26A and 26B.

When the planter 12 is to be transported along the public highways from one field to another, the wing portions 16 and 18 may fold up into the position shown in phantom lines in Fig. 2. Thus, in the transport mode, the center portion wheels 22A-22D must carry the total combined weight of the planter 12. Thus, the center portion wheels 22A-22D are typically of larger and heavier construction than are the wing portion wheels 24A and 24B and 26A and 26B.

In one embodiment, the pneumatic agricultural implement tires of the present invention are particularly suitable for use as the wing portion tires 24A-24B and 26A-26B of a fold up seed planter such as shown in Fig. 2. In other cases, the tires of the present invention may also be used as the center portion tires 22A-22D. In general the tires of the present invention are suitable for use on many different types of free wheeling agricultural implements including corn planters, tillage equipment, disc implements, rippers, field cultivators, air seeders and the like.

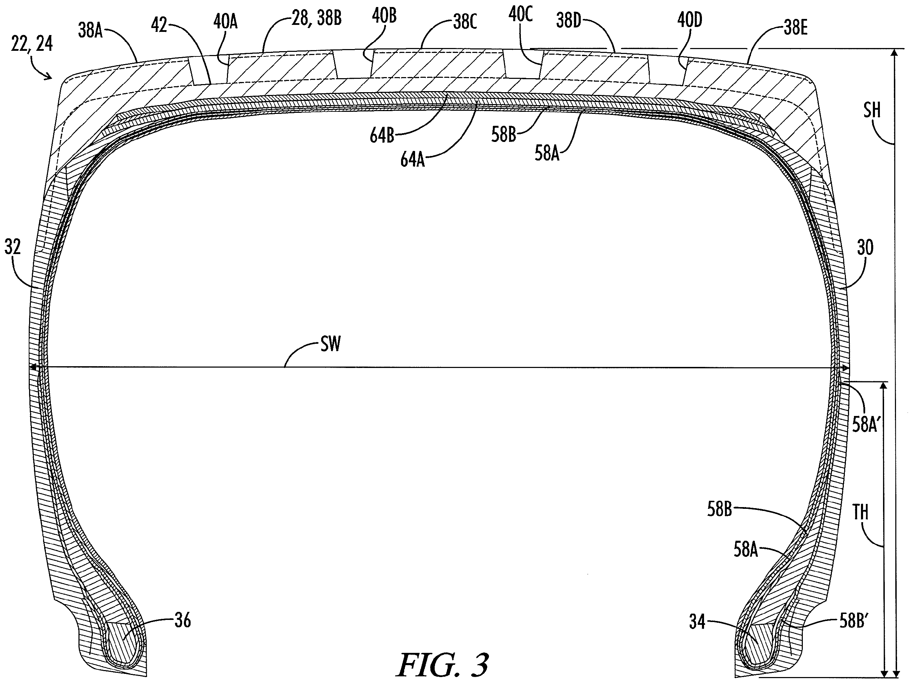

In Fig. 3 a cross-sectional view is shown of one of the tires 24. The tire 24 includes a circumferential tread or tread portion 28, first and second sidewalls or sidewall portions 30 and 32, and first and second beads or bead portions 34 and 36. Each of the bead portions comprises a bundle of bead wires.

The circumferential tread portion 28 includes a ribbed implement tread pattern having a plurality of relatively wide parallel circumferential ribs 38A-38E separated by relatively narrow circumferential grooves 40A-40D, meaning that the ribs are wider than the grooves. The ribs 38 extend upward from a tread floor 42. The tire has a section width SW, a section height SH, and a turn-up height TH.

The tire 24 includes two carcass plies 58A and 58B. The carcass plies are preferably organic cord reinforced radial carcass or body plies, which may for example be polyester cord reinforced carcass plies. In the embodiment illustrated, there are two and only two such carcass plies. The carcass plies extend circumferentially about the tire and include axially inner portions and axially outer portions. The axial outer portions extend around the bead portions such as 34 and 36 and terminate at turn-up ends such as 58A' and 58B'.

The tire 24 includes first and second steel reinforced circumferentially extending belts 64A and 64B disposed between the carcass plies 58 and the tread portion 28. In the embodiment illustrated there are two and only two such belts. Alternating belts may have the reinforcing cords thereof biased at alternating angles. Steel belts, as opposed to fabric belts, are particularly desirable in the present tires for several reasons. First, the steel belts provide a more effective barrier preventing puncture of the tires by field stubble. Second, the steel belts allow for greater inflation pressures. Third, steel belts result in a lighter tire construction as compared to a tire designed for equivalent load using fabric reinforced belts.

In order to reduce the damage to fields caused by the agricultural radial implement tires 24, the tires 24 should be constructed to operate at relatively low inflation pressures. For example, the tires 24 may operate with inflation pressures in the range of about 160 kPa (23 psi) to 380 kPa (55 psi).

The tires of the present invention are preferably designed and constructed to have an "IF" load rating as defined by The Tire and Rim Association, Inc., 175 Montrose West Avenue, Suite 150, Copley, OH 44321 (the Tire and Rim Association). The tires of the present invention are also preferably designed and constructed to have a D speed rating as defined by The Tire and Rim Association, which applies to tires designed for speeds up to 64,4 km/h (40 mph). The Tire and Rim Association is the standardizing body for the tire, rim, valve and allied parts industry for the United States. Tire and Rim Association standards are published in the Tire and Rim Year Book and other supplemental publications available from the Tire and Rim Association.

The "IF" load rating is a rating standard that has been previously developed for use on radial ply metric agricultural tractor drive wheel tires, and published as Table IF-1, as published for example in the Tire and Rim Year Book 2012. That published table is based upon a rating formula published by Tire and Rim Association for the "IF" rating, which is found in the Engineering Design Information book published by Tire and Rim Association. That rating formula is found at Page 5-53, Rev. 1, dated 10/22/10 of the Engineering Design Information book published by Tire and Rim Association, and will use as factor K₁ the special IF factor of 1.20.

Presently there are no published load tables for the "IF" standard with regard to free-wheeling agricultural implement tires, or with regard to tires for rims in the 38,1 cm (15 inches) to 45,72 cm (18 inches) diameter range, because such tires have never been constructed. But the formula which will be used to generate such tables is the formula noted above. The following Table I has been generated using that formula and it describes several examples of new tire sizes of the radial ply pneumatic agricultural implement tire 24 of the present invention, and provides the "IF" load ratings for those tires in accordance with the formula referenced above.

| | **TABLE I** | | | | | | | |
|---|---|---|---|---|---|---|---|---|
| TIRE | TIRE LOAD LIMITS AT VARIOUS COLD INFLATION PRESSURES | | | | | | | |
| SIZE | kPa | **120** | **160** | **200** | **240** | **280** | **320** | **360** |
| | PSI | **17** | **23** | **29** | **35** | **41** | **46** | **52** |
| **IF280/70R15** | KG | **800** | **1000** | **1180** | **1320** | **1500** | **1600** | **1800** |
| | LBS. | **1760** | **2200** | **2600** | **2910** | **3300** | **3520** | **3960** |
| | LINO. | **100** | **108** | **114** | **118** | **122** | **124** | **128** |
| **IF240/80R15** | KG | **710** | **875** | **1030** | **1150** | **1320** | **1450** | |
| | LBS. | **1570** | **1930** | **2270** | **2540** | **2910** | **3200** | |
| | LI NO. | **96** | **103** | **109** | **113** | **118** | **121** | |
| **IF265/85R15** | KG | **875** | **1090** | **1285** | **1450** | | | |
| | LBS. | **1930** | **2400** | **2830** | **3200** | | | |
| | LI NO. | **103** | **111** | **117** | **121** | | | |
| **IF320/70R15** | KG | **1000** | **1215** | **1450** | **1600** | **1850** | **2000** | **2180** |
| | LBS. | **2200** | **2680** | **3200** | **3520** | **4080** | **4400** | **4800** |
| | LI NO. | **108** | **115** | **121** | **124** | **129** | **132** | **135** |
| **IF195/95R15** | KG | **600** | **750** | **875** | **975** | **1120** | | |
| | LBS. | **1320** | **1650** | **1930** | **2150** | **2470** | | |
| | LI NO. | **90** | **98** | **103** | **107** | **112** | | |
| **IF280/70R16** | KG | **825** | **1030** | **1215** | | | | |
| | LBS. | **1820** | **2270** | **2680** | | | | |
| | LI NO. | **101** | **109** | **115** | | | | |
| **IF265/85R16** | KG | **900** | **1120** | **1320** | | | | |
| | LBS. | **1980** | **2470** | **2910** | | | | |
| | LI NO. | **104** | **112** | **118** | | | | |
| **IF190/95R16** | KG | **600** | **730** | **875** | | | | |
| | LBS. | **1320** | **1610** | **1930** | | | | |
| | LI NO. | **90** | **97** | **103** | | | | |
| **IF280/95R16** | KG | **1090** | **1360** | **1600** | | | | |
| | LBS. | **2400** | **3000** | **3520** | | | | |
| | LI NO. | **111** | **119** | **124** | | | | |
| **IF440/55R18** | KG | **1450** | **1750** | **2060** | **2300** | **2650** | | |
| | LBS. | **3200** | **3860** | **4540** | **5080** | **5840** | | |
| | LI NO. | **121** | **127** | **133** | **137** | **142** | | |
| **IF340/65R18** | KG | **1120** | **1360** | **1600** | **1800** | **2060** | **2240** | |
| | LBS. | **2470** | **3000** | **3520** | **3960** | **4540** | **4940** | |
| | LI NO. | **112** | **119** | **124** | **128** | **133** | **136** | |
| **IF355/65R18** | KG | **1180** | **1450** | **1700** | **1950** | **2180** | **2360** | |
| | LBS. | **2600** | **3200** | **3740** | **4300** | **4800** | **5200** | |
| | LI NO. | **114** | **121** | **126** | **131** | **135** | **138** | |

Table I provides the tire load limits at various cold inflation pressures. The inflation pressures are stated alternatively in kPa and PSI. The load ratings are stated alternatively in KG and in LBS. Also provided is the Load Index number as specified by the Tire and Rim Association, abbreviated as "LI NO."

As is apparent from the table above, the permissible load increases with inflation pressure. It is noted that any production tire will typically be marked with a maximum inflation pressure. That marking represents an arbitrary point selected by the manufacturer from the above table. But it is meaningful to describe a tire as having a maximum load at some specified inflation pressure, which may be the maximum inflation pressure specified by the manufacturer for the tire. For example, the 280/75R15 tire set forth in the above table can be described as being rated for a load of at least about 1800 KG (3960 lb) at a cold inflation pressure of 360 kPa (52 psi). That rating can also be described as being rated at 1800KG (3960 lb) for a Load Index Number of 128. Such a description does not require that the manufacturer mark the tire as having a maximum inflation pressure of 360 kPa (52 psi). In the table above, the right hand most value listed is the value that has been selected as the maximum inflation pressure for the tires of the present invention.

It will be understood that when a tire is described herein as having a certain load rating, this is a reference to the load rating as specified by the appropriate standards setting association for tires of that size and construction, for example the Tire and Rim Association. It does not require that the tire actually be exactly so specified by its manufacturer, or that the rating markings on the tire be exactly as specified.

The design approach described above is particularly suited for use on tire rims 66 having a nominal diameter of 38,1 cm (15 inches) or 40, 64 cm (16 inches), which are readily available for use on agricultural implements. Also, the present tires are preferably designed to modern metric sizes, as contrasted to the older imperial unit sizes typically used for implement tires. The tire construction described herein is generally applicable to tires having section widths in a range of from about 190 mm to about 440 mm designed for use on rims having nominal diameters from 38,1 cm (15 inches) to 45,72 cm (18 inches).

The agricultural radial implement tires of the present invention described above are intended for replacement of prior art bias ply implement tires that typically required significantly higher inflation pressures to achieve load ratings comparable to those of the present invention. The following Table II compares three of the new radial implement tire sizes of the present invention to the prior art bias ply implement tires being replaced.

**TABLE II**

| *New Tire Size* | *New Rated Load*/*Inflation (lbs @ psi)* | *Old Bias Imp Tire Size* | *Bias Rated Load*/*Inflation (lbs @ psi)* |
|---|---|---|---|
| IF280/70R15 | 3960 @ 52 | 11L-15FI | 3960 @ 90 |
| IF240/80R15 | 3200 @ 46 | 9.5L-15FI | 3080 @ 75 |
| IF265/85R15 | 3200 @ 35 | 10.00-15 | 3200 @ 40 |

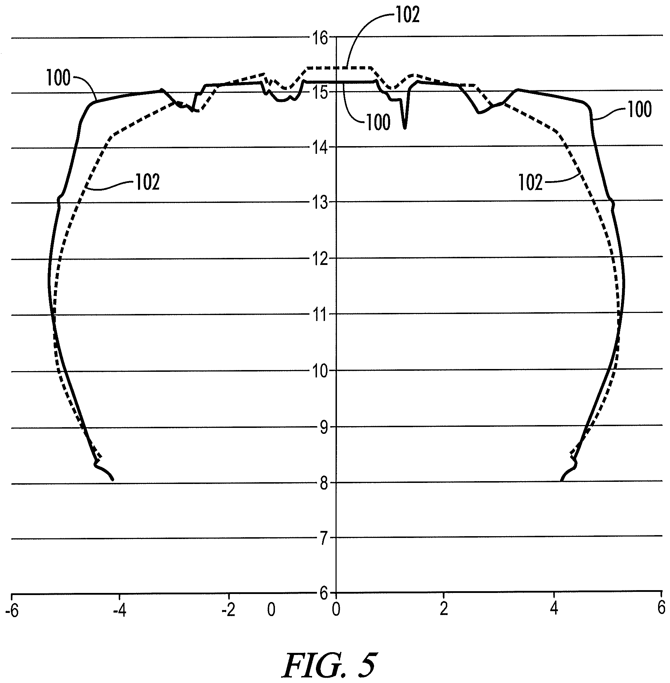

As will be understood by those skilled in the art, for agricultural implement tires it is desirable to provide the necessary load carrying capability at as low an inflation pressure as possible so as to spread out the footprint of the tire so as to reduce damage to crops and soil structure as the tire rolls across a field, which improves root growth. Fig. 5 shows in cross-section profile a comparison of the cross section of the IF280/70R15 tire of the present invention, to the prior art llL-15FI that would be replaced. In Fig. 5 the profile 100 represents the IF280/70R15 tire of the present invention inflated to its rated pressure of 360 kPa (52 psi), and profile 102 represents the prior art 11L-15FI tire inflated to its rated pressure 621 kPa (90 psi).

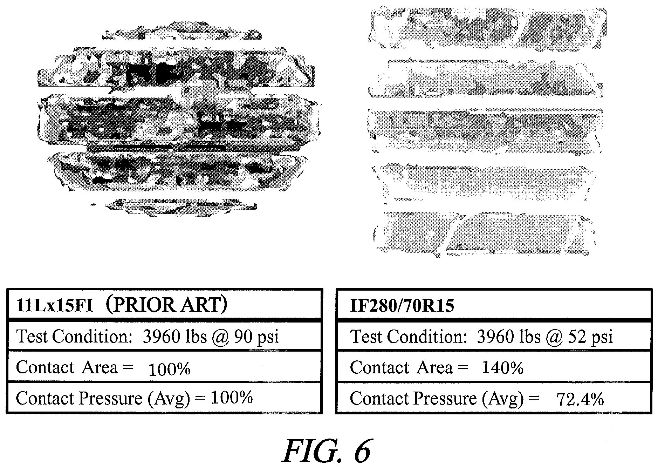

Similarly, Fig. 6 shows a comparison of the footprint of the prior art 11L-15FI on the left to the IF280/70R15 on the right. It can be seen that the agricultural radial implement tire of the present invention spreads the load over a much larger area at a much lower inflation pressure and contact pressure.

Thus it is seen that the apparatus and methods of the present invention readily achieve the ends and advantages mentioned as well as those inherent therein. While certain preferred embodiments of the invention have been illustrated and described for purposes of the present disclosure, numerous changes in the arrangement and construction of parts and steps may be made by those skilled in the art, which changes are encompassed within the scope of the present invention as defined by the appended claims.

## Claims

1. A pneumatic agricultural implement tire (24), comprising:
a circumferential tread portion (28) including a ribbed implement tread pattern having a plurality of relatively wide parallel circumferential ribs (38A-38E) separated by relatively narrow circumferential grooves (40A-40D);
a pair of bead portions (34, 36); and
a pair of sidewall portions (30, 32) extending from the bead portions (34, 36) to the tread portion (28),
**characterized by**
a carcass including first and second organic cord reinforced radial body plies (58A, 58B) extending between and wrapped around the bead portions (34, 36);
first and second steel reinforced circumferentially extending belts (64A, 64B) disposed between the carcass and the circumferential tread portion (28);
the tire (24) being sized to fit on a rim having a nominal diameter in a range of from about 38,1 cm (15 inches) to about 45,72 cm (18 inches); and
the tire (24) having an IF load rating in accordance with the standards of the Tire and Rim Association.

2. The tire (24) of claim 1, wherein the tire (24) has a D speed rating in accordance with the standards of the Tire and Rim Association.

3. The tire (24) of claim 1 or claim 2, wherein:
the carcass includes two and only two body plies (58A, 58B) being the first and second body plies (58A, 58B).

4. The tire (24) of any one of claims 1 to 3, wherein:
the tire (24) includes two and only two belts (64A, 64B) being the first and second belts (64A, 64B).

5. The tire (24) of any one of claims 1 to 4, wherein:
the organic cords of the body plies (58A, 58B) comprise polyester cords.

6. The tire (24) of any one of claims 1 to 5, wherein:
the tire (24) is a size IF280/70R15, and is rated for a load of at least about 1796,23 kg (3960 lb) at a cold inflation pressure of 358,53 kPa (52 psi).

7. The tire (24) of any one of claims 1 to 5, wherein:
the tire (24) is a size IF240/80R15, and is rated for a load of at least about 1451,50 kg (3200 lb) at a cold inflation pressure of 317,16 kPa (46 psi).

8. The tire (24) of any one of claims 1 to 5, wherein:
the tire (24) is a size IF265/85R15 and is rated for a load of at least about 1451,50 kg (3200 lb) at a cold inflation pressure of 241,32 kPa (35 psi).

9. The tire (24) of any one of claims 1 to 5, wherein:
the tire (24) is a size IF320/70R15 rated for a load of at least about 2177,24 (4800 lb) at a cold inflation pressure of 358,53 kPa (52 psi).

10. The tire (24) of any one of claims 1 to 5, wherein:
the tire (24) is a size IF195/95R15 rated for a load of at least about 1120,37 kg (2470 lb) at a cold inflation pressure of 282,69 kPa (41 psi).

11. The tire (24) of any one of claims 1 to 5, wherein:
the tire (24) is a size IF280/70R16 rated for a load of at least about 1215,63 kg (2680 lb) at a cold inflation pressure of 199,95 kPa (29 psi).

12. The tire (24) of any one of claims 1 to 5, wherein:
the tire (24) is a size IF265/85R16 rated for a load of at least about 1319,95 kg (2910 lb) at a cold inflation pressure of 199,95 kPa (29 psi).

13. The tire (24) of any one of claims 1 to 5, wherein:
the tire (24) is a size IF190/95R16 rated for a load of at least about 875,43 kg (1930 lb) at a cold inflation pressure of 199,95 kPa (29 psi).

14. The tire (24) of any one of claims 1 to 5, wherein:
the tire (24) is a size IF280/95R16 rated for a load of at least about 1596,65 kg (3520 lb) at a cold inflation pressure of 199,95 kPa (29 psi).

15. The tire (24) of any one of claims 1 to 5, wherein:
the tire (24) has a size and load capacity selected from the group consisting of:
a size IF280/70R15 rated for a load of at least about 1796,23 kg (3960 lb) at a cold inflation pressure of 358,53 kPa (52 psi);
a size IF240/80R15 rated for a load of at least about 1451,50 kg (3200 lb) at a cold inflation pressure of 317,16 kPa (46 psi);
a size IF265/85R15 rated for a load of at least about 1451,50 kg (3200 lb) at a cold inflation pressure of 241,32 kPa (35 psi);
a size IF320/70R15 rated for a load of at least about 2177,24 kg (4800 lb) at a cold inflation pressure of 358,53 kPa (52 psi);
a size IF195/95R15 rated for a load of at least about 1120,37 kg (2470 lb) at a cold inflation pressure of 282,69 kPa (41 psi);
a size IF280/70R16 rated for a load of at least about 1215,63 kg (2680 lb) at a cold inflation pressure of 199,95 kPa (29 psi);
a size IF265/85R16 rated for a load of at least about 1319,95 kg (2910 lb) at a cold inflation pressure of 199,95 kPa (29 psi);
a size IF190/95R16 rated for a load of at least about 875,43 kg (1930 lb) at a cold inflation pressure of 199,95 kPa (29 psi);
a size IF280/95R16 rated for a load of at least about 1596,65 kg (3520 lb) at a cold inflation pressure of 199,95 kPa (29 psi);
a size IF440/55R18 rated for a load of at least about 2648,98 kg (5840 lb) at a cold inflation pressure of 282,69 kPa (41 psi);
a size IF340/65R18 rated for a load of at least about 2240,75 kg (4940 lb) at a cold inflation pressure of 317,16 kPa (46 psi); and
a size IF355/65R18 rated for a load of at least about 2358,68 kg (5200 lb) at a cold inflation pressure of 317,16 kPa (46 psi).

## Patentansprüche

1. Luftreifen (24) für ein landwirtschaftliches Gerät, umfassend:
einen umlaufenden Laufflächenabschnitt (28), der ein geripptes Geräte-Laufflächenprofil mit einer Vielzahl von relativ breiten parallelen umlaufenden Rippen (38A - 38E) aufweist, die durch relativ schmale umlaufende Rillen (40A - 40D) getrennt sind;
ein Paar Wulstabschnitte (34, 36); und
ein Paar Seitenwandabschnitte (30, 32), die sich von den Wulstabschnitten (34, 36) zu dem Laufflächenabschnitt (28) erstrecken,
**dadurch gekennzeichnet, dass**
eine Karkasse, die erste und zweite mit organischem Kordfaden verstärkte radiale Unterbaulagen (58A, 58B) aufweist, die sich zwischen den Wulstabschnitten (34, 36) erstrecken und um diese gewickelt sind;
erste und zweite stahlverstärkte, in Umfangsrichtung verlaufende Gürtel (64A, 64B), die zwischen der Karkasse und dem umlaufenden Laufflächenabschnitt (28) angeordnet sind;
wobei der Reifen (24) so bemessen ist, dass er auf einer Felge mit einem Nenndurchmesser in einem Bereich von etwa 38,1 cm (15 Zoll) bis etwa 45,72 cm (18 Zoll) Platz findet; und
wobei der Reifen (24) eine IF-Belastbarkeit entsprechend den Standards der Tire and Rim Association aufweist.

2. Reifen (24) nach Anspruch 1, wobei der Reifen (24) einen D-Geschwindigkeitsindex aufweist, der den Standards der Tire and Rim Association entspricht.

3. Reifen (24) nach Anspruch 1 oder 2, wobei:
die Karkasse zwei und nur zwei Unterbaulagen (58A, 58B) aufweist, die die ersten und zweiten Unterbaulagen (58A, 58B) sind.

4. Reifen (24) nach einem der Ansprüche 1 bis 3, wobei:
der Reifen (24) zwei und nur zwei Gürtel (64A, 64B) aufweist, die die ersten und zweiten Gürtel (64A, 64B) sind.

5. Reifen (24) nach einem der Ansprüche 1 bis 4, wobei: der organische Kordfaden der Unterbaulagen (58A, 58B) Polyesterkordfäden umfasst.

6. Reifen (24) nach einem der Ansprüche 1 bis 5, wobei:
der Reifen (24) eine Größe von IF280/70R15 aufweist, die für eine Last von mindestens etwa 1.796,23 kg (3.960 lb) bei einem Kaltreifendruck von 358,53 kPa (52 psi) dimensioniert ist.

7. Reifen (24) nach einem der Ansprüche 1 bis 5, wobei:
der Reifen (24) eine Größe von IF240/80R15 aufweist, die für eine Last von mindestens etwa 1.451,50 kg (3.200 lb) bei einem Kaltreifendruck von 317,16 kPa (46 psi) bemessen ist.

8. Reifen (24) nach einem der Ansprüche 1 bis 5, wobei:
der Reifen (24) eine Größe von IF265/85R15 aufweist, die für eine Last von mindestens etwa 1.451,50 kg (3.200 lb) bei einem Kaltreifendruck von 241,32 kPa (35 psi) bemessen ist.

9. Reifen (24) nach einem der Ansprüche 1 bis 5, wobei:
der Reifen (24) eine Größe von IF320/70R15 aufweist, die für eine Last von mindestens etwa 2.177,24 (4.800 lb) bei einem Kaltreifendruck von 358,53 kPa (52 psi) bemessen ist.

10. Reifen (24) nach einem der Ansprüche 1 bis 5, wobei:
der Reifen (24) eine Größe von 1F195/95R15 aufweist, die für eine Last von mindestens etwa 1.120,37 kg (2.470 lb) bei einem Kaltreifendruck von 282,69 kPa (41 psi) bemessen ist.

11. Reifen (24) nach einem der Ansprüche 1 bis 5, wobei:
der Reifen (24) eine Größe von IF280/70R16 aufweist, die für eine Last von mindestens etwa 1215,63 kg (2680 Ibs) bei einem Kaltreifendruck von 199,95 kPa (29 psi) bemessen ist.

12. Reifen (24) nach einem der Ansprüche 1 bis 5, wobei:
der Reifen (24) eine Größe von IF265/85R16 aufweist, die für eine Last von mindestens etwa 1.319,95 kg (2.910 lb) bei einem Kaltreifendruck von 199,95 kPa (29 psi) bemessen ist.

13. Reifen (24) nach einem der Ansprüche 1 bis 5, wobei:
der Reifen (24) eine Größe von IF190/95R16 aufweist, die für eine Last von mindestens etwa 875,43 kg (1.930 lb) bei einem Kaltreifendruck von 199,95 kPa (29 psi) bemessen ist.

14. Reifen (24) nach einem der Ansprüche 1 bis 5, wobei:
der Reifen (24) eine Größe von IF280/95R16 aufweist, die für eine Last von mindestens etwa 1.596,65 kg (3.520 lb) bei einem Kaltreifendruck von 199,95 kPa (29 psi) bemessen ist.

15. Reifen (24) nach einem der Ansprüche 1 bis 5, wobei:
der Reifen (24) eine Größe und Lastkapazität aufweist, die ausgewählt ist aus der Gruppe bestehend aus: einer Größe von IF280/70R15, die für eine Last von mindestens etwa 1.796, 23 kg (3.960 Ibs) bei einem Kaltreifendruck von 358, 53 kPa (52 psi) bemessen ist;
einer Größe von IF240/80R15, die für eine Last von mindestens etwa 1.451,50 kg (3.200 lb)bei einem Kaltreifendruck von 317,16 kPa (46 psi) bemessen ist;
einer Größe von IF265/85R15, die für eine Last von mindestens etwa 1.451,50 kg (3.200 lb) bei einem Kaltreifendruck von 241,32 kPa (35 psi) bemessen ist;
einer Größe von IF320/70R15, die für eine Last von mindestens etwa 2.177,24 kg (4.800 lb) bei einem Kaltreifendruck von 358,53 kPa (52 psi) bemessen ist;
einer Größe von IF195/95R15, die für eine Last von mindestens etwa 1.120,37 kg (2.470 lb) bei einem Kaltreifendruck von 282,69 kPa (41 psi) bemessen ist;
einer Größe von IF280/70R16, die für eine Last von mindestens etwa 1.215,63 kg (2.680 lb) bei einem Kaltreifendruck von 199,95 kPa (29 psi) bemessen ist;
einer Größe von IF265/85R16, die für eine Last von mindestens etwa 1.319,95 kg (2.910 lb) bei einem Kaltreifendruck von 199,95 kPa (29 psi) bemessen ist;
einer Größe von IF190/95R16, die für eine Last von mindestens etwa 875,43 kg (1.930 lb) bei einem Kaltreifendruck von 199,95 kPa (29 psi) bemessen ist;
einer Größe von IF280/95R16, die für eine Last von mindestens etwa 1.596,65 kg (3.520 lb) bei einem Kaltreifendruck von 199,95 kPa (29 psi) bemessen ist;
einer Größe von IF440/55R18, die für eine Last von mindestens etwa 2.648,98 kg (5.840 lb) bei einem Kaltreifendruck von 282,69 kPa (41 psi) bemessen ist;
einer Größe von IF340/65R18, die für eine Last von mindestens etwa 2.240,75 kg (4.940 lb) bei einem Kaltreifendruck von 317,16 kPa (46 psi) bemessen ist; und
einer Größe von IF355/65R18, die für eine Last von mindestens etwa 2.358,68 kg (5.200 lb) bei einem Kaltreifendruck von 317,16 kPa (46 psi) bemessen ist.

## Revendications

1. Pneumatique agricole (24), comprenant :
une partie bande de roulement circonférentielle (28) incluant une sculpture de bande de roulement nervurée possédant une pluralité de nervures circonférentielles parallèles relativement larges (38A-38E) séparées par des rainures circonférentielles relativement étroites (40A-40D) ;
une paire de parties talon (34, 36) ; et
une paire de parties flanc (30, 32) s'étendant des parties talon (34, 36) vers la partie bande de roulement (28) ;
**caractérisé par**
une carcasse incluant un premier et un deuxième pli de corps radial renforcé par corde organique (58A, 58B) s'étendant entre et autour des parties talon (34, 36) ;
une première et une deuxième courroie renforcée par acier s'étendant de manière circonférentielle (64A, 64B) disposées entre la carcasse et la partie bande de roulement circonférentielle (28) ;
le pneumatique (24) étant dimensionné pour s'ajuster sur une jante possédant un diamètre nominal dans une plage d'environ 38,1 cm (15 pouces) à environ 45,72 cm (18 pouces) ; et
le pneumatique (24) possédant une charge nominale IF en conformité avec les normes de la Tire and Rim Association.

2. Pneumatique (24) selon la revendication 1, dans lequel le pneumatique (24) a une cote de vitesse D en conformité avec les normes de la Tire and Rim Association.

3. Pneumatique (24) selon la revendication 1 ou 2, dans lequel :
la carcasse comporte deux et seulement deux plis de corps (58A, 58B) qui sont le premier et le deuxième pli de corps (58A, 58B).

4. Pneumatique (24) selon l'une quelconque des revendications 1 à 3, dans lequel :
le pneumatique (24) comporte deux et seulement deux courroies (64A, 64B) étant la première et la deuxième courroie (64A, 64B).

5. Pneumatique (24) selon l'une quelconque des revendications 1 à 4, dans lequel les cordes organiques des plis de corps (58A, 58B) comprennent des cordes en polyester.

6. Pneumatique (24) selon l'une quelconque des revendications 1 à 5, dans lequel :
le pneumatique (24) a une taille IF280/70R15 et est prévu pour une charge d'au moins environ 1 796,23 kg (3 960 lb) à une pression de gonflage à froid de 358,53 kPa (52 psi).

7. Pneumatique (24) selon l'une quelconque des revendications 1 à 5, dans lequel :
le pneumatique (24) a une taille IF240/80R15 et est prévu pour une charge d'au moins environ 1 451,50 kg (3 200 lb) à une pression de gonflage à froid de 317,16 kPa (46 psi).

8. Pneumatique (24) selon l'une quelconque des revendications 1 à 5, dans lequel :
le pneumatique (24) a une taille IF265/85R15 et est prévu pour une charge d'au moins environ 1 451,50 kg (3 200 lb) à une pression de gonflage à froid de 241,32 kPa (35 psi).

9. Pneumatique (24) selon l'une quelconque des revendications 1 à 5, dans lequel :
le pneumatique (24) a une taille IF320/70R15 prévue pour une charge d'au moins environ 2 177,24 kg (4 800 lb) à une pression de gonflage à froid de 358,53 kPa (52 psi).

10. Pneumatique (24) selon l'une quelconque des revendications 1 à 5, dans lequel :
le pneumatique (24) a une taille IF195/95R15 prévue pour une charge d'au moins environ 1 120,37 kg (2 470 lb) à une pression de gonflage à froid de 282,69 kPa (41 psi).

11. Pneumatique (24) selon l'une quelconque des revendications 1 à 5, dans lequel :
le pneumatique (24) a une taille IF280/70R16 prévue pour une charge d'au moins environ 1 215,63 kg (2 680 lb) à une pression de gonflage à froid de 199,95 kPa (29 psi).

12. Pneumatique (24) selon l'une quelconque des revendications 1 à 5, dans lequel :
le pneumatique (24) a une taille IF265/85R16 prévue pour une charge d'au moins environ 1 319,95 kg (2 910 lb) à une pression de gonflage à froid de 199,95 kPa (29 psi).

13. Pneumatique (24) selon l'une quelconque des revendications 1 à 5, dans lequel :
le pneumatique (24) a une taille IF190/95R16 prévue pour une charge d'au moins environ 875,43 kg (1 930 Ib) à une pression de gonflage à froid de 199,95 kPa (29 psi).

14. Pneumatique (24) selon l'une quelconque des revendications 1 à 5, dans lequel :
le pneumatique (24) a une taille IF280/95R16 prévue pour une charge d'au moins environ 1 596,65 kg (3 520 lb) à une pression de gonflage à froid de 199,95 kPa (29 psi).

15. Pneumatique (24) selon l'une quelconque des revendications 1 à 5, dans lequel :
le pneumatique (24) a une capacité de taille et de charge choisie parmi le groupe constitué par : une taille IF280/70R15 prévue pour une charge d'au moins environ 1 796,23 kg (3 960 lb) à une pression de gonflage à froid de 358,53 kPa (52 psi) ;
une taille IF240/80R15 prévue pour une charge d'au moins environ 1 451,50 kg (3 200 lb) à une pression de gonflage à froid de 317,16 kPa (46 psi) ;
une taille IF265/85R15 prévue pour une charge d'au moins environ 1 451,50 kg (3 200 lb) à une pression de gonflage à froid de 241,32 kPa (35 psi) ;
une taille IF320/70R15 prévue pour une charge d'au moins environ 2 177,24 kg (4 800 lb) à une pression de gonflage à froid de 358,53 kPa (52 psi) ;
une taille IF195/95R15 prévue pour une charge d'au moins environ 1 120,37 kg (2 470 lb) à une pression de gonflage à froid de 282,69 kPa (41 psi) ;
une taille IF280/70R16 prévue pour une charge d'au moins environ 1 215,63 kg (2 680 Ib) à une pression de gonflage à froid de 199,95 kPa (29 psi) ;
une taille IF265/85R16 prévue pour une charge d'au moins environ 1 319,95 kg (2 910 Ib) à une pression de gonflage à froid de 199,95 kPa (29 psi) ;
une taille IF190/95R16 prévue pour une charge d'au moins environ 875,43 kg (1 930 Ib) à une pression de gonflage à froid de 199,95 kPa (29 psi) ;
une taille IF280/95R16 prévue pour une charge d'au moins environ 1 596,65 kg (3 520 Ib) à une pression de gonflage à froid de 199,95 kPa (29 psi) ;
une taille IF440/55R18 prévue pour une charge d'au moins environ 2 648,98 kg (5 840 Ib) à une pression de gonflage à froid de 282,69 kPa (41 psi) ;
une taille IF340/65R18 prévue pour une charge d'au moins environ 2 240,75 kg (4 940 Ib) à une pression de gonflage à froid de 317,16 kPa (46 psi) ; et
une taille IF355/65R18 prévue pour une charge d'au moins environ 2 358,68 kg (5 200 Ib) à une pression de gonflage à froid de 317,16 kPa (46 psi).
